# EUROPÄISCHE PATENTSCHRIFT

(11) **EP 3 176 369 B1**
(45) Veröffentlichungstag und Bekanntmachung des Hinweises auf die Patenterteilung: **29.05.2019**
(21) Anmeldenummer: 15198098.4
(22) Anmeldetag: 04.12.2015
(51) Int. Cl.: F04D 29/54, F04D 29/66, F01D 5/16

(54) **GASTURBINEN-VERDICHTER**
GAS TURBINE COMPRESSOR
COMPRESSEUR DE TURBINES A GAZ

(43) Veröffentlichungstag der Anmeldung: 07.06.2017
(73) Patentinhaber: MTU Aero Engines AG, 80995 München (DE)
(72) Erfinder: SCHÖNENBORN, Harald, 85757 Karlsfeld (DE)

(56) Entgegenhaltungen:
- EP-A1- 2 860 347
- EP-A2- 0 921 275
- WO-A1-2006/084438
- US-A1- 2005 249 586

## Beschreibung

Die vorliegende Erfindung betrifft einen Verdichter für eine Gasturbine, insbesondere eines Flugtriebwerks sowie eine Gasturbine, insbesondere eines Flugtriebwerks, mit wenigstens einem solchen Verdichter.

Aus der EP 2 860 347 A1 ist ein aerodynamisch und strukturell verstimmtes Schaufelgitter für einen Verdichter einer Gasturbine bekannt, das erste und hiervon verschiedene zweite Schaufeln aufweist, um ein Flattern bei einem Pumpen des Verdichters zu reduzieren.

Eine Aufgabe einer Ausführung der vorliegenden Erfindung ist es, eine Gasturbine zu verbessern.

Diese Aufgabe wird durch einen Verdichter mit den Merkmalen des Anspruchs 1 gelöst. Anspruch 7 stellt eine Gasturbine mit einem oder mehreren hier beschriebenen Verdichtern unter Schutz. Vorteilhafte Ausführungsformen der Erfindung sind Gegenstand der Unteransprüche.

Nach einer Ausführung der vorliegenden Erfindung weist bzw. weisen ein Verdichter für eine Gasturbine, insbesondere eines Flugtriebwerks, insbesondere ein oder mehrere Verdichter einer Gasturbine, insbesondere eines Flugtriebwerks, (jeweils) mehrere in Durchströmungsrichtung hintereinander angeordnete Schaufelgitter auf, wobei wenigstens ein in Durchströmungsrichtung stromaufwärtigeres Leit- oder Laufschaufelgitter zwei oder mehr baulich voneinander verschiedene Schaufeltypen aufweist und daher nachfolgend ohne Beschränkung der Allgemeinheit als stromaufwärtiges bzw. vorderes verstimmtes Schaufelgitter bezeichnet wird, und wenigstens ein in Durchströmungsrichtung stromabwärtigeres Leit- oder Laufschaufelgitter ebenfalls zwei oder mehr baulich voneinander verschiedene Schaufeltypen aufweist und daher nachfolgend ohne Beschränkung der Allgemeinheit als stromabwärtiges bzw. hinteres verstimmtes Schaufelgitter bezeichnet wird. Entsprechend kann das stromaufwärtige verstimmte Schaufelgitter in einer Ausführung ein Leitschaufelgitter mit zwei oder mehr baulich voneinander verschiedenen Leitschaufeltypen oder ein Laufschaufelgitter mit zwei oder mehr baulich voneinander verschiedenen Laufschaufeltypen sein. Das stromabwärtige verstimmte Schaufelgitter kann in einer Ausführung ein Leitschaufelgitter mit zwei oder mehr baulich voneinander verschiedenen Leitschaufeltypen oder ein Laufschaufelgitter mit zwei oder mehr baulich voneinander verschiedenen Laufschaufeltypen sein

Nach der vorliegenden Erfindung sind wenigstens 80%, insbesondere wenigstens 85%, insbesondere wenigstens 95%, insbesondere alle bis auf höchstens 5, insbesondere alle bis auf höchstens 3, insbesondere alle, Laufschaufeln eines stromabwärtigsten bzw. hintersten bzw. letzten Laufschaufelgitters des Verdichters, das in Durchströmungsrichtung stromabwärts des stromabwärtigen verstimmten Schaufelgitters angeordnet ist, untereinander baugleich.

Es hat sich überraschend herausgestellt, dass durch die Kombination von wenigstens zwei verstimmten Schaufelgittern, insbesondere einem stromaufwärtigen und einem stromabwärtigen verstimmten Laufgitter, einem stromaufwärtigen und einem stromabwärtigen verstimmten Leitgitter, einem stromaufwärtigen verstimmten Lauf- und einem stromabwärtigen verstimmten Leitgitter oder einem stromaufwärtigen verstimmten Leit- und einem stromabwärtigen verstimmten Laufgitter, mit jeweils wenigstens zwei unterschiedlichen Schaufeltypen mit einem solcherart höchstens begrenzt, vorzugsweise wenig, insbesondere, wenigstens im Wesentlichen, nicht, verstimmten stromabwärtigsten bzw. hintersten bzw. letzten Laufschaufelgitter ein Flattern dieser und/oder weiterer Schaufelgitter des Verdichters bei einem Pumpen besonders vorteilhaft reduziert werden kann. Diesbezüglich wird angenommen, dass die beiden verstimmten Schaufelgitter miteinander aerodynamisch und/oder strukturell interagieren und diese Interaktion durch das nachgeschaltete stromabwärtigste Laufschaufelgitter, das höchstens begrenzt verstimmt ist, vorteilhaft beeinflusst wird.

Der bzw. ein Verdichter ist in einer Ausführung ein stromaufwärtigster bzw. Niederdruckverdichter. In einer Ausführung ist der bzw. ein Verdichter ein stromabwärtigster bzw. Hochdruckverdichter. Gleichermaßen kann der bzw. ein Verdichter ein zwischen Nieder- und Hochdruckverdichter angeordneter Mitteldruckverdichter sein.

Die Durchströmungsrichtung ist von einem Verdichterein- zu einem Verdichterauslass (gerichtet), so dass ein stromaufwärtigstes Lauf- bzw. Leitschaufelgitter ein verdichtereintrittsnächstes Lauf- bzw. Leitschaufelgitter ist, ein stromabwärtigstes Lauf- bzw. Leitschaufelgitter entsprechend ein verdichteraustrittsnächstes Lauf- bzw. Leitschaufelgitter ist. Mit anderen Worten ist die Durchströmungsrichtung eine reguläre bzw. Auslegungs-Durchströmungsrichtung, entgegen der Gas bei einem Pumpen temporär strömen kann.

In einer Ausführung sind das stromaufwärtige verstimmte Schaufelgitter und das stromabwärtige verstimmte Schaufelgitter unmittelbar benachbart bzw. folgen in Durchströmungsrichtung unmittelbar aufeinander.

Es hat sich überraschend herausgestellt, dass durch die Anordnung eines oder mehrerer Paare aus benachbarten stromaufwärtigen und stromabwärtigen verstimmten Schaufelgittern ein Flattern dieser und/oder weiterer Schaufelgitter des Verdichters bei einem Pumpen vorteilhaft reduziert werden kann.

In einer anderen Ausführung sind zwischen dem stromaufwärtigen verstimmten Schaufelgitter und dem stromabwärtigen verstimmten Schaufelgitter genau ein oder mehrere Leit- und/oder genau ein oder mehrere Laufschaufelgitter angeordnet, von deren Schaufeln jeweils wenigstens 80%, insbesondere wenigstens 85%, insbesondere wenigstens 95%, insbesondere alle bis auf höchstens 5, insbesondere alle bis auf höchstens 3, insbesondere alle, untereinander bzw. innerhalb des jeweiligen Schaufelgitters baugleich sind.

Es hat sich überraschend herausgestellt, dass durch die Anordnung genau eines oder mehrerer höchstens solcherart begrenzt, vorzugsweise wenig, insbesondere nicht, verstimmter Lauf- und/oder Leitschaufelgitter zwischen dem stromaufwärtigen und dem stromabwärtigen verstimmten Schaufelgitter ein Flattern dieser und/oder weiterer Schaufelgitter des Verdichters bei einem Pumpen jeweils besonders vorteilhaft reduziert werden kann.

Zusätzlich oder alternativ sind in einer Ausführung zwischen dem stromaufwärtigen verstimmten Schaufelgitter und dem stromabwärtigen verstimmten Schaufelgitter ein oder mehrere verstimmte Leit- oder Laufschaufelgitter angeordnet, die jeweils zwei oder mehr baulich voneinander verschiedene Schaufeltypen aufweisen und daher nachfolgend ohne Beschränkung der Allgemeinheit als weitere verstimmte Schaufelgitter bezeichnet werden.

Es hat sich überraschend herausgestellt, dass durch die Anordnung eines oder mehrerer weiterer verstimmter Lauf- und/oder Leitschaufelgitter zwischen dem stromaufwärtigen und dem stromabwärtigen verstimmten Schaufelgitter ein Flattern dieser und/oder weiterer Schaufelgitter des Verdichters bei einem Pumpen besonders vorteilhaft reduziert werden kann.

Insbesondere kann der bzw. ein Verdichter also eine Sequenz {(stromaufwärtiges) verstimmtes Leit- oder Laufschaufelgitter mit wenigstens zwei Schaufeltypen - höchstens begrenzt verstimmtes Leit- oder Laufschaufelgitter mit wenigstens 80% baugleichen Schaufeln - (stromabwärtiges) verstimmtes Leit- oder Laufschaufelgitter mit wenigstens zwei Schaufeltypen} oder {(stromaufwärtiges) verstimmtes Leit- oder Laufschaufelgitter mit wenigstens zwei Schaufeltypen - (weiteres) verstimmtes Leit- oder Laufschaufelgitter mit wenigstens zwei Schaufeltypen - (stromabwärtiges) verstimmtes Leit- oder Laufschaufelgitter mit wenigstens zwei Schaufeltypen} aufweisen, wobei jeweils das stromabwärtigste Laufschaufelgitter wenigstens 80% baugleiche Schaufeln aufweist.

In einer Ausführung ist das stromaufwärtige verstimmte Schaufelgitter ein stromaufwärtigstes bzw. vorderstes bzw. erstes Leit- oder Laufschaufelgitter des Verdichters.

Hierdurch kann insbesondere auch ein Flattern dieses und/oder weiterer Schaufelgitter des Verdichters bei einer regulären Durchströmung besonders vorteilhaft reduziert werden kann.

In einer Ausführung sind zwischen dem stromabwärtigen verstimmten Schaufelgitter und dem stromabwärtigsten Laufschaufelgitter genau ein oder mehrere Leit- und/oder genau ein oder mehrere Laufschaufelgitter angeordnet, von deren Schaufeln jeweils wenigstens 80%, insbesondere wenigstens 85%, insbesondere wenigstens 95%, insbesondere alle bis auf höchstens 5, insbesondere alle bis auf höchstens 3, insbesondere alle, untereinander bzw. innerhalb des jeweiligen Schaufelgitters baugleich sind.

Zusätzlich oder alternativ sind in einer Ausführung zwischen dem stromabwärtigen verstimmten Schaufelgitter und dem stromabwärtigstes Laufschaufelgitter genau ein oder mehrere verstimmte Leit- und/oder genau ein oder mehrere verstimmte Laufschaufelgitter angeordnet, die jeweils zwei oder mehr baulich voneinander verschiedene Schaufeltypen aufweisen.

Es hat sich überraschend herausgestellt, dass hierdurch jeweils einzeln und insbesondere in Kombination ein Flattern dieser und/oder weiterer Schaufelgitter des Verdichters bei einem Pumpen besonders vorteilhaft reduziert werden kann.

In einer Ausführung sind von den Schaufeln eines oder mehrere der verstimmten Schaufelgitter, insbesondere des stromaufwärtigen verstimmten (Lauf- oder Leit)Schaufelgitters, des stromabwärtigen verstimmten (Lauf- oder Leit)Schaufelgitters, eines oder mehrerer zwischen diesen angeordneter (weiterer) verstimmter Lauf- oder Leitschaufelgitter und/oder eines oder mehrerer zwischen dem stromabwärtigen verstimmten (Lauf- oder Leit)Schaufelgitter und dem stromabwärtigsten Laufschaufelgitter angeordneter verstimmter Lauf- oder Leitschaufelgitter jeweils wenigstens 5%, insbesondere wenigstens 10%, insbesondere wenigstens 25%, insbesondere wenigstens 2, insbesondere wenigstens 5, von einem Schaufeltyp und wenigstens 5%, insbesondere wenigstens 10%, insbesondere wenigstens 25%, insbesondere wenigstens 2, insbesondere wenigstens 5, von einem baulich hiervon verschiedenen Schaufeltyp.

Es hat sich überraschend herausgestellt, dass durch eine solche Verstimmung ein Flattern dieser und/oder weiterer Schaufelgitter des Verdichters bei einem Pumpen besonders vorteilhaft reduziert werden kann.

Zwei oder mehr baulich voneinander verschiedene Schaufeltypen können in einer Ausführung insbesondere unterschiedliche Eigenfrequenzen bzw. -formen aufweisen, insbesondere unterschiedliche erste und/oder höhere Biege- und/oder Torsionseigenfrequenzen bzw. -formen, insbesondere des Schaufelblatts. Zusätzlich oder alternativ können in einer Ausführung zwei oder mehr baulich voneinander verschiedene Schaufeltypen insbesondere unterschiedliche Fillet- und/oder Deckbandgeometrien aufweisen. Allgemein können in einer Ausführung zwei oder mehr baulich voneinander verschiedene Schaufeltypen insbesondere strukturell unterschiedlich ausgebildet bzw. das Schaufelgitter mit diesen baulich voneinander verschiedenen Schaufeltypen insbesondere strukturell verstimmt sein.

Zusätzlich oder alternativ können zwei oder mehr baulich voneinander verschiedene Schaufeltypen in einer Ausführung insbesondere unterschiedliche Schaufelblatt-profile, insbesondere unterschiedliche Vorderkanten(formen) und/oder unterschiedliche Hinterkanten(formen) und/oder unterschiedliche Profilschnitte (auf der- bzw. denselben radialen Höhe(n)) aufweisen. Allgemein können in einer Ausführung zwei oder mehr baulich voneinander verschiedene Schaufeltypen insbesondere aerodynamisch unterschiedlich ausgebildet bzw. das Schaufelgitter mit diesen baulich voneinander verschiedenen Schaufeltypen insbesondere aerodynamisch verstimmt sein.

Die zwei oder mehr baulich voneinander verschiedenen Schaufeltypen eines verstimmten Schaufelgitters und zwei oder mehr baulich voneinander verschiedene Schaufeltypen eines anderen verstimmten Schaufelgitters können insbesondere alle baulich voneinander verschieden sein. Mit anderen Worten können verschiedene verstimmte Schaufelgitter jeweils wenigstens zwei schaufelgitterspezifische baulich voneinander verschiedene Schaufeltypen aufweisen.

Zwei Schaufeln sind insbesondere im Sinne der vorliegenden Erfindung baugleich, sofern sie im Rahmen der Fertigungs- bzw. Prüftoleranz identisch sind bzw. einander in Geometrie und Massenverteilung entsprechen.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert, die einzige:

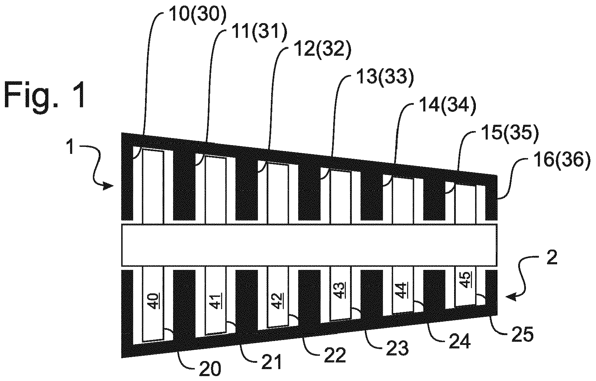

- Fig. 1: einen Verdichter einer Gasturbine nach einer Ausführung der vorliegenden Erfindung.

Fig. 1 zeigt einen Verdichter einer Gasturbine nach einer Ausführung der vorliegenden Erfindung mit einem Verdichtereinlass 1 und einem Verdichterauslass 2. Eine Durchströmungsrichtung ist vom Verdichtereinlass 1 zum Verdichterauslass 2 gerichtet (von links nach rechts in Fig. 1).

In dieser Durchströmungsrichtung sind mehrere gehäusefeste Leitschaufelgitter 10-16 mit Leitschaufeln 30-36 angeordnet, die in Fig. 1 schwarz dargestellt sind.

Zwischen jedem Paar Leitschaufelgitter ist ein Laufschaufelgitter angeordnet, wobei die Laufschaufelgitter in Fig. 1 weiß dargestellt und mit 20-25 nummeriert sind, ihre Laufschaufeln entsprechend mit 40-45.

Das stromabwärtigste Laufschaufelgitter 25 (ganz rechts in Fig. 1) ist nicht verstimmt und weist ausschließlich untereinander baugleiche Laufschaufeln 45 auf.

Das stromaufwärtigste Laufschaufelgitter 20 (ganz links in Fig. 1) ist verstimmt, wenigstens 10% seiner Laufschaufeln 40 sind von einem Laufschaufeltyp und wenigstens 10% von einem hiervon verschiedenen Laufschaufeltyp. Es bildet somit ein stromaufwärtig(st)es verstimmtes Laufschaufelgitter.

Wenigstens eines der zwischen diesem stromaufwärtigen verstimmten Laufschaufelgitter 20 und dem nicht verstimmten Laufschaufelgitter 25 angeordnete Laufschaufelgitter 21, 22, 23 und/oder 24, im Ausführungsbeispiel das Laufschaufelgitter 22, ist ebenfalls verstimmt, von seinen Laufschaufeln 42 sind (jeweils) wenigstens 10% von einem Laufschaufeltyps und wenigstens 10% von einem hiervon verschiedenen Laufschaufeltyp, es bildet somit ein stromabwärtiges verstimmtes Laufschaufelgitter.

Dabei können ein oder mehrere andere der Laufschaufelgitter und/oder in einer Abwandlung auch das stromaufwärtigste Laufschaufelgitter 20 auch nicht verstimmt sein und ausschließlich untereinander bzw. innerhalb des jeweiligen Laufschaufelgitters baugleiche Laufschaufeln aufweisen.

Im Ausführungsbeispiel ist das Laufschaufelgitter 23 zwischen dem stromabwärtigen verstimmten Laufschaufelgitter 22 und dem stromabwärtigsten Laufschaufelgitter 25 ebenfalls verstimmt, das Laufschaufelgitter 24 zwischen dem stromabwärtigen verstimmten Laufschaufelgitter 22 und dem stromabwärtigsten Laufschaufelgitter 25 sowie das Laufschaufelgitter 21 zwischen dem stromaufwärtigen verstimmten Laufschaufelgitter 20 und dem stromabwärtigen verstimmten Laufschaufelgitter 22 hingegen nicht verstimmt.

Ein oder mehrere der Leitschaufelgitter 10-16 sind in einer Ausführung ebenfalls verstimmt, wobei jeweils wenigstens 10% der Laufschaufeln des entsprechenden Leitschaufelgitters von einem (leitschaufelspezifischen ersten) Leitschaufeltyp und wenigstens 10% von einem hiervon verschiedenen (leitschaufelspezifischen zweiten) Leitschaufeltyp sind. Zusätzlich oder alternativ sind in einer Ausführung ein oder mehrere der Leitschaufelgitter 10-16 nicht verstimmt und weisen jeweils ausschließlich untereinander bzw. innerhalb des jeweiligen Leitschaufelgitters baugleiche Leitschaufeln auf.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Verdichtereinlass
- 2: Verdichterauslass
- 10-16: Leitschaufelgitter
- 20-25: Laufschaufelgitter
- 30-36: Leitschauf
- 40-45: Laufschaufel

## Patentansprüche

1. Verdichter für eine Gasturbine, insbesondere eines Flugtriebwerks, mit mehreren in einer Durchströmungsrichtung von einem Verdichterein- zu einem Verdichterauslass (1, 2) hintereinander angeordneten Schaufelgittern (10-25), wobei wenigstens ein stromaufwärtiges bzw. vorderes verstimmtes Schaufelgitter (20) und wenigstens ein stromabwärtiges bzw. hinteres verstimmtes Schaufelgitter (22) jeweils wenigstens zwei baulich voneinander verschiedene Schaufeltypen aufweisen und wenigstens 80% der Laufschaufeln (45) eines stromabwärtigsten bzw. hintersten bzw. letzten Laufschaufelgitters (25) des Verdichters, das in Durchströmungsrichtung stromabwärts des stromabwärtigen bzw. hinteren verstimmten Schaufelgitters (22) angeordnet ist, untereinander baugleich sind.

2. Verdichter nach dem vorhergehenden Anspruch, **dadurch gekennzeichnet, dass** zwischen den beiden verstimmten Schaufelgittern (20, 22) wenigstens ein Schaufelgitter (21) angeordnet ist, von dessen Schaufeln (41) wenigstens 80%, untereinander baugleich sind.

3. Verdichter nach einem der vorhergehenden Ansprüche, **dadurch gekennzeichnet, dass** das stromaufwärtige verstimmte Schaufelgitter ein stromaufwärtigstes Schaufelgitter (20) des Verdichters ist.

4. Verdichter nach einem der vorhergehenden Ansprüche, **dadurch gekennzeichnet, dass** zwischen dem stromabwärtigen verstimmten Schaufelgitter (22) und dem stromabwärtigsten Laufschaufelgitter (25) wenigstens ein Schaufelgitter (24), von dessen Schaufeln (44) wenigstens 80%, untereinander baugleich sind, und/oder wenigstens ein verstimmtes Schaufelgitter (23) angeordnet ist, das wenigstens zwei baulich voneinander verschiedene Schaufeltypen aufweist.

5. Verdichter nach einem der vorhergehenden Ansprüche, **dadurch gekennzeichnet, dass** von den Schaufeln (40, 42, 43) wenigstens eines der verstimmten Schaufelgitter (20, 22, 23) wenigstens 5% von einem Schaufeltyp und wenigstens 5% von einem baulich hiervon verschiedenen Schaufeltyps sind.

6. Verdichter nach einem der vorhergehenden Ansprüche, **dadurch gekennzeichnet, dass** wenigstens zwei baulich voneinander verschiedene Schaufeltypen unterschiedliche Eigenfrequenzen, Fillet- und/oder Deckbandgeometrien und/oder Schaufelblattprofile, insbesondere unterschiedliche Vorder- und/oder Hinterkanten und/oder Profilschnitte, aufweisen.

7. Gasturbine, insbesondere eines Flugtriebwerks, mit wenigstens einem Verdichter nach einem der vorhergehenden Ansprüche.

## Claims

1. Compressor for a gas turbine, in particular of an aircraft engine, comprising a plurality of blade cascades (10-25) arranged one behind the other in a throughflow direction from a compressor inlet to a compressor outlet (1, 2), wherein at least one upstream or front detuned blade cascade (20) and at least one downstream or rear detuned blade cascade (22) each has at least two blade types that are structurally different from one another, and at least 80% of the rotor blades (45) of a furthest downstream or rearmost or last rotor blade cascade (25) of the compressor, which cascade is arranged downstream of the downstream or rear detuned blade cascade (22), are structurally identical to one another.

2. Compressor according to the preceding claim, **characterized in that,** between the two detuned blade cascades (20, 22), at least one blade cascade (21) is arranged of which at least 80% of the blades (41) are structurally identical to one another.

3. Compressor according to either of the preceding claims, **characterized in that** the upstream detuned blade cascade is a furthest upstream blade cascade (20) of the compressor.

4. Compressor according to any of the preceding claims, **characterized in that,** between the downstream detuned blade cascade (22) and the furthest downstream rotor blade cascade (25), at least one blade cascade (24) is arranged of which at least 80% of the blades (44) are structurally identical to one another, and/or at least one detuned blade cascade (23) is arranged which has at least two blade types that are structurally different from one another.

5. Compressor according to any of the preceding claims, **characterized in that,** of the blades (40, 42, 43) of at least one of the detuned blade cascades (20, 22, 23), at least 5% are of one blade type and at least 5% are of a blade type structurally different therefrom.

6. Compressor according to any of the preceding claims, **characterized in that** at least two blade types which are structurally different from one another have different natural frequencies, fillet and/or shroud geometries and/or airfoil profiles, in particular different front and/or rear edges and/or profile sections.

7. Gas turbine, in particular of an aircraft engine, comprising at least one compressor according to any of the preceding claims.

## Revendications

1. Compresseur pour une turbine à gaz, notamment d'un moteur d'avion, comportant plusieurs grilles d'aubes (10-25) disposées l'une derrière l'autre dans le sens d'écoulement d'une entrée de compresseur vers une sortie de compresseur (1, 2), au moins une grille d'aubes (20) désaccordées amont ou avant et au moins une grille d'aubes (22) désaccordées aval ou arrière ayant chacune au moins deux types d'ailles structurellement différentes et au moins 80 % des aubes mobiles (45) d'une grille d'aubes mobiles (25) aval, plus en arrière ou de fin du compresseur, qui est disposée en aval de la grille d'aubes (22) désaccordées aval ou arrière dans le sens d'écoulement, ont une structure identique.

2. Compresseur selon la revendication précédente, **caractérisé en ce qu'**au moins une grille d'aubes (21) est disposée entre les deux grilles d'aubes désaccordées (20, 22), dont au moins 80 % des aubes (41) ont une structure identique.

3. Compresseur selon l'une des revendications précédentes, **caractérisé en ce que** la grille d'aubes désaccordées amont est une grille d'aubes située le plus en amont (20) du compresseur.

4. Compresseur selon l'une des revendications précédentes, **caractérisé en ce qu'**au moins une grille d'aubes (24), dont au moins 80 % des aubes (44) ont une structure identique, et/ou au moins une grille d'aubes désaccordées (23), qui présente au moins deux types d'aubes structurellement différents, est disposée entre la grille d'aubes (22) désaccordées aval et la grille d'aubes mobiles (25) aval.

5. Compresseur selon l'une des revendications précédentes, **caractérisé en ce que**, parmi les aubes (40, 42, 43), au moins une des grilles d'aubes désaccordées (20, 22, 23) est au moins 5 % d'un type d'aubes et au moins 5 % d'un type d'aubes structurellement différentes.

6. Compresseur selon l'une des revendications précédentes, **caractérisé en ce qu'**au moins deux types d'aubes structurellement différentes ont des fréquences propres différentes, des géométries de bandes de filet et/ou de couverture et/ou des profils de lames d'aubes différents, en particulier des bords avant et/ou arrière et/ou sections droites différents/différentes.

7. Turbine à gaz, notamment d'un moteur d'avion, comportant au moins un compresseur selon l'une des revendications précédentes.
